# EUROPÄISCHE PATENTANMELDUNG

(11) **EP 1 288 053 A2**
(43) Veröffentlichungstag der Anmeldung: **05.03.2003**
(21) Anmeldenummer: 02012659.5
(22) Anmeldetag: 07.06.2002
(51) Int. Cl.: B60K 15/03

(54) **Kraftstoffbehälter aus Kunststoff**

(30) Priorität: 31.08.2001 DE 10142811
(71) Anmelder: AUDI AG, 85045 Ingolstadt (DE)
(72) Erfinder: Bachhuber, Josef, 85123 Karlskron (DE)

(57) **Zusammenfassung**

Bei einem Kraftstoffbehälter aus Kunststoff, insbesondere für Kraftfahrzeuge, mit einer Montageöffnung (14) für Einbauten innerhalb des Kraftstoffbehälters, die mittels eines Verschlussdeckels (16) ebenfalls aus Kunststoff dicht verschlossen ist, wobei durch den Verschlussdeckel zumindest Versorgungsleitungen hindurchgeführt und/oder Halterungen für Einbauten angeordnet sind, wird vorgeschlagen, zur Erzielung eines günstigen Permeationsverhaltens und einer einfachen Montage den Verschlussdeckel im Zwei-Komponenten-Verfahren im Dichtbereich (16a) aus PE und im übrigen Bereich (16b) aus zäherem, temperaturfesterem Kunststoff wie POM, PA, modifiziertes PE, etc. mit ggf. Glasfaserverstärkung auszubilden und den Verschlussdeckel mit dem Kraftstoffbehälter ebenfalls aus PE im Dichtbereich stoffschlüssig zu verschweißen.

## Beschreibung

Die Erfindung betrifft einen Kraftstoffbehälter aus Kunststoff, insbesondere für Kraftfahrzeuge, mit einer Montageöffnung für Einbauten innerhalb des Kraftstoffbehälters, die mittels eines Verschlussdeckels ebenfalls aus Kunststoff dicht verschlossen ist, wobei durch den Verschlussdeckel zumindest Versorgungsleitungen hindurchgeführt und/oder Halterungen für Einbauten angeordnet sind.

Ein derartiger Kraftstoffbehälter ist beispielsweise in der DE 196 22 528 C2 beschrieben. Der Verschlussdeckel besteht zur Erzielung der nötigen Temperatur- und Bauteilfestigkeit aus Polyacetat mit zwischen 10 % und 30 % Glasfaseranteil oder alternativ aus Polyphenylensulfid. Obwohl in der genannten Schrift nicht beschrieben, ist ersichtlich, dass der Verschlussdeckel in herkömmlicher Weise unter Zwischenschaltung einer Dichtung mit dem nicht dargestellten Kraftstoffbehälter zu verschrauben ist.

Durch die DE 196 13 894 A1 ist es ferner bekannt, bei einem Kraftstoffbehälter aus Kunststoff die Wartungsöffnung für im Kraftstoffbehälter angeordnete Einbauten durch einen separaten Verschlussdeckel ebenfalls aus Kunststoff dicht zu verschließen, wobei der Verschlussdeckel mit dem Kraftstoffbehälter verschweißt ist. Materialangaben zu dem verwendeten Kunststoff sind der Schrift nicht entnehmbar.

Aufgabe der Erfindung ist es, einen Kraftstoffbehälter der gattungsgemäßen Art vorzuschlagen, der bei sehr günstigem Permerationsverhalten und einfacher Montage eine zuverlässige Durchführung und/oder Aufnahme von Versorgungsleitungen bzw. Einbauhalterungen ermöglicht.

Diese Aufgabe wird erfindungsgemäß mit den kennzeichnenden Merkmalen des Patentanspruches 1 gelöst. Vorteilhafte Weiterbildungen der Erfindung sind in den weiteren Patentansprüchen angeführt.

Erfindungsgemäß wird vorgeschlagen, den Kraftstoffbehälter aus Polyäthylen (PE) bevorzugt im Blasformverfahren herzustellen, den Verschlussdeckel im Zwei-Komponenten-Verfahren im Dichtbereich ebenfalls aus PE und im übrigen Bereich aus zäherem, temperaturfesterem Kunststoff wie POM, PA, modifiziertes PE, etc. mit ggf. Glasfaserverstärkung herzustellen und den Verschlussdeckel mit dem Kraftstoffbehälter im Dichtbereich stoffschlüssig zu verbinden, insbesondere zu verschweißen.

Durch diese erfindungsgemäßen Maßnahmen kann der Kraftstoffbehälter kostengünstig insbesondere im Blasformverfahren aus PE hergestellt sein und durch Einsatz des Zwei-Komponenten-Verfahrens im Dichtbereich bei im wesentlichen gleicher Materialzusammensetzung stoffschlüssig verklebt, insbesondere jedoch verschweißt werden. Trotzdem werden Halterungen für Einbauten und/oder Durchführungen für Versorgungsleitungen durch einen zäheren, temperaturfesteren Kunststoff wie Polyacetat mit Glasfaserverstärkung zuverlässig in dem Verschlussdeckel z. B. durch Umspritzen gehalten. Der Verschlussdeckel vereint somit durch seine Zwei-Komponenten-Ausbildung die vorteilhaften Eigenschaften des PE im Dichtbereich und des PA oder POM im übrigen Bereich des Verschlussdeckels.

In dem Verschlussdeckel kann in an sich bekannter Weise eine durchgehende Steckverbindung zur elektrischen Verbindung beispielsweise einer Kraftstoffpumpe innerhalb des Kraftstoffbehälters mit dem Bordnetz des Kraftfahrzeuges eingespritzt sein. Ferner können eine Flüssigkeitsverbindung herstellende, durchgehende Nippel für den Anschluss von Kraftstoffleitungen vorgesehen sein.

Alternativ oder zusätzlich können an dem Verschlussdeckel unmittelbar Halterungen angeformt sein, mittels der Einbauten innerhalb des Kraftstoffbehälters wie eine Kraftstoffpumpe, der Geber für eine Füllstands-Messeinrichtung, ein Staubehälter, etc. an dem Verschlussdeckel angebunden sein können.

Ein Ausführungsbeispiel der Erfindung ist im folgenden mit weiteren Einzelheiten näher erläutert. Die schematische Zeichnung zeigt einen Schnitt durch einen Abschnitt eines Kraftstoffbehälters mit einer Montageöffnung und einem an der Montageöffnung angeschweißten Verschlussdeckel.

Die abschnittsweise dargestellte obere Wand 12 eines Kraftstoffbehälters 10 für Kraftfahrzeuge weist eine etwa kreisscheibenförmige Montageöffnung 14 auf, die mittels eines Verschlussdeckels 16 dicht verschlossen ist. Der Verschlussdeckel 16 liegt dabei mit einem ringförmigen Dichtbereich 16a an einer an die Wand 12 angeformten Ringschulter 12a an.

Der Verschlussdeckel 16 ist im Zwei-Komponenten-Verfahren im radial äußeren Dichtbereich 16a ebenfalls aus PE und in seinem übrigen, zentralen Bereich 16b (durch unterschiedlich geneigte Schraffuren gekennzeichnet) aus einem mit 20 % glasfaserverstärktem Polyacetat (PA) ausgeführt. Die Trennlinie 16c bezeichnet in etwa den Bereich, in dem die beiden genannten Materialien während der Herstellung des Verschlussdeckels 16 im Zwei-K-Verfahren stoffschlüssig miteinander verbunden sind.

In dem zentralen Bereich 16b des Verschlussdeckels 16, der im Spritzgießverfahren hergestellt ist, ist ein Sockel 16d angeformt, der in Verbindung mit mehreren, in dem Bereich 16b eingespritzten metallischen Steckkontakten (allgemein mit 16e bezeichnet) eine elektrische Steckverbindung bildet.

Ferner ist unmittelbar an dem Bereich 16b eine nur abschnittsweise dargestellte Halterung 16f für einen nicht dargestellten Geber einer Flüssigkeitsstand-Messeinrichtung angeformt, die in das Innere des Kraftstoffbehälters 10 einragt.

Zudem ist in dem Bereich 16b eine Durchführung für die Entnahme von Kraftstoff mit rohrförmigen Nippeln 16g angeordnet, wobei diese Nippel 16g ebenfalls unmittelbar angeformt sind.

Der Verschlussdeckel 16 wird bei der Endmontage des Kraftstoffbehälters 10 ggf. mit den an die Halterung 16f angebauten Einbauten auf die Einfüllöffnung 14 bzw. deren Ringschulter 12a aufgesetzt und dann der Dichtbereich 16a mit der Ringschulter 12a umlaufend dicht verschweißt (Schweißnaht 18). Die Schweißung kann durch Spiegelschweißen oder Ultraschallschweißen durchgeführt werden.

Anstelle des beschriebenen glasfaserverstärktem PA kann auch ein anderer geeigneter Kunststoff verwendet sein, der im Zwei-K-Verfahren mit dem Dichtbereich 16a aus PE stoffschlüssig verbindbar ist.

An der Halterung 16f kann alternativ oder zusätzlich eine Kraftstoffpumpe und/oder ein Kraftstoff-Staubehälter, ein Kraftstoff-Filter, Entlüftungseinrichtungen, etc. befestigt sein. Gleiches gilt für zusätzliche Durchführungen durch den Bereich 16b des Verschlussdeckels 16.

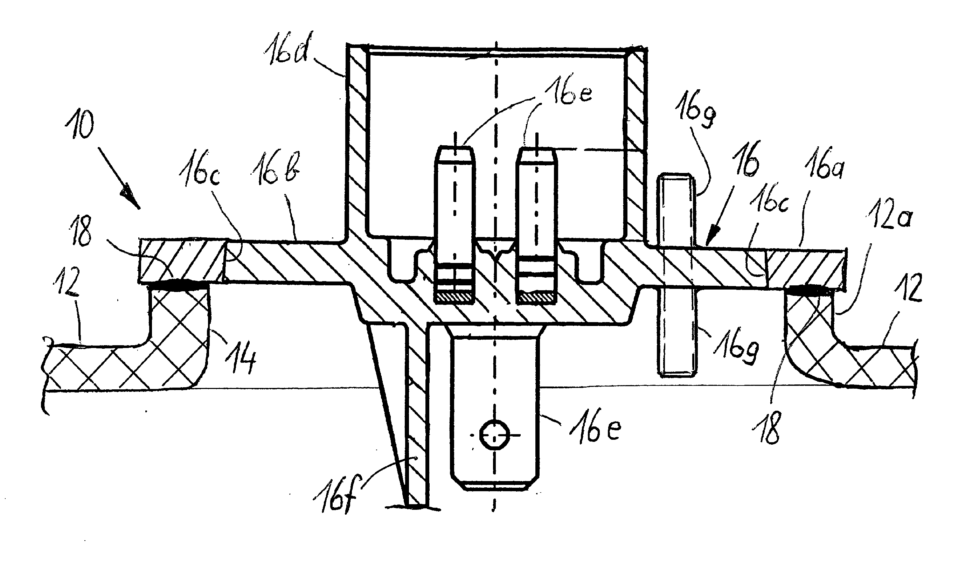

## Patentansprüche

1. Kraftstoffbehälter aus Kunststoff, insbesondere für Kraftfahrzeuge, mit einer Montageöffnung für Einbauten innerhalb des Kraftstoffbehälters, die mittels eines Verschlussdeckels ebenfalls aus Kunststoff dicht verschlossen ist, wobei durch den Verschlussdeckel zumindest Versorgungsleitungen hindurchgeführt und/oder Halterungen für Einbauten angeordnet sind, **dadurch gekennzeichnet, dass**
- der Kraftstoffbehälter (10) aus Polyäthylen (PE) hergestellt ist,
- der Verschlussdeckel (16) im Zwei-Komponenten-Verfahren im Dichtbereich (16a) aus PE und im übrigen Bereich (16b) aus zäherem, temperaturfesterem Kunststoff wie POM, PA, modifiziertes PE, etc. mit ggf. Glasfaserverstärkung hergestellt ist, und
- der Verschlussdeckel (16) mit dem Kraftstoffbehälter (10) im Dichtbereich (12a,16a) stoffschlüssig verbunden ist.

2. Kraftstoffbehälter nach Anspruch 1, **dadurch gekennzeichnet, dass** der übrige Bereich (16b) des Verschlussdeckels (16) aus glasfaserverstärktem Polyacetat (PA) besteht.

3. Kraftstoffbehälter nach Anspruch 1 oder 2, **dadurch gekennzeichnet, dass** der Verschlussdeckel (16) im Dichtbereich (16a) mit dem Kraftstoffbehälter (10) verschweißt ist.

4. Kraftstoffbehälter nach einem der Ansprüche 1 bis 3, **dadurch gekennzeichnet, dass** in dem Verschlussdeckel (16) eine durchgehende Steckverbindung bildende metallische Steckkontakte (16e) eingespritzt sind.

5. Kraftstoffbehälter nach einem der Ansprüche 1 bis 4, **dadurch gekennzeichnet, dass** an dem Verschlussdeckel (16) durchgehende Nippel (16g) für den Anschluss von Kraftstoffleitungen angespritzt sind.

6. Kraftstoffbehälter nach einem der Ansprüche 1 bis 5, **dadurch gekennzeichnet, dass** an dem Verschlussdeckel (16) unmittelbar Halterungen (16f) für Einbauten im Kraftstoffbehälter (10) wie Kraftstoffpumpe, Geber für eine Füllstands-Mess-Einrichtung, etc. angeformt sind.
